(19) Europäisches Patentamt
European Patent Office
Office européen des brevets

(11) **EP 1 321 733 A2**

(12) **DEMANDE DE BREVET EUROPEEN**

(43) Date de publication:
**25.06.2003 Bulletin 2003/26**

(51) Int Cl.⁷: **F28D 1/03**, F28F 3/14

(21) Numéro de dépôt: **02027849.5**

(22) Date de dépôt: **12.12.2002**

(84) Etats contractants désignés:
**AT BE BG CH CY CZ DE DK EE ES FI FR GB GR IE IT LI LU MC NL PT SE SI SK TR**
Etats d'extension désignés:
**AL LT LV MK RO**

(30) Priorité: **14.12.2001 ES 200102886**

(71) Demandeur: **Valeo Termico S.A.**
**50011 Zaragoza (ES)**

(72) Inventeurs:
• **Laborda, Fernando**
**50011 Zaragoza (ES)**
• **Correas, Luis Carlos**
**50011 Zaragoza (ES)**
• **Perrin, Patrick**
**Pluvault 21110 Genlis (FR)**

(74) Mandataire: **Rolland, Jean-Christophe**
**Valeo Thermique Moteur,**
**Propriété Industrielle,**
**8, rue Louis-Lormand**
**78321 La Verrière (FR)**

(54) **Echangeur de chaleur liquide-air, plus particulièrement pour véhicule automobile, et procédé de fabrication d'un tel échangeur**

(57) Echangeur comprenant deux plaques (1, 2) définissant entre elles un conduit (4) pour le fluide à refroidir ; l'intérieur dudit conduit (4) comprend une pluralité de colonnes de jonction (7) d'une plaque à l'autre.

Procédé comprenant le dépôt de graphite sur des zones d'une plaque (1, 2), le soudage par laminage de ladite première plaque à l'autre, et l'injection d'air sous pression afin de séparer les plaques par déformation du matériau dans les zones (4) où le graphite a été déposé ; la couche de graphite est déposée en laissant une pluralité de points libres où se formeront des colonnes de jonction (7) entre les plaques (1, 2).

On obtient ainsi un échangeur robuste, avec un bon rendement thermique et des pertes de charge réduites.

FIG. 1

EP 1 321 733 A2

**Description**

La présente invention concerne un échangeur de chaleur liquide-air, en particulier pour refroidir le combustible dans un moteur à combustion interne de véhicule, comprenant deux plaques sensiblement parallèles définissant entre elles au moins un conduit de circulation du fluide à refroidir.

Conformément à un autre aspect, l'invention concerne un procédé de fabrication d'un échangeur de chaleur liquide-air.

ARRIERE-PLAN DE L'INVENTION

Dans certains systèmes d'injection pour moteurs à combustion interne, une partie du combustible aspiré du réservoir est restituée sans être injectée dans les cylindres ; un échangeur de chaleur liquide-air est interposé dans la ligne de retour du combustible vers le réservoir dans la mesure où, du fait des pressions élevées auxquelles il est soumis et de la circulation à proximité du moteur, le combustible peut atteindre une température supérieure à 90° et il serait dangereux de le réintroduire dans le réservoir à cette température.

La formation de bulles de vapeurs, la cavitation, des températures de service de composants supérieures à celles établies pour le matériau et la formation de substances par craquage du gazole font partie des problèmes susceptibles d'apparaître.

Les échangeurs connus pour cette application sont essentiellement plans et sont, en général, constitués au moins d'une plaque métallique sur laquelle est soudé, avec ou sans apport de matériau, un tube coudé formant un chemin tortueux à travers lequel circule le combustible à refroidir. Le brevet FR2774635, par exemple, décrit un échangeur de ce type.

Ces échangeurs classiques sont fabriqués par des processus comportant diverses étapes, notamment des opérations d'emboutissage profond et de soudage avec apport de matériau ; l'échangeur obtenu est plutôt lourd et son rendement thermique est relativement médiocre dans la mesure où l'échange de chaleur s'effectue à travers une double paroi (la paroi de la plaque et la paroi du tube) et est entravé par le matériau d'apport des soudures ; qui plus est, la surface du tube au contact de l'air extérieur est réduite du fait de la présence de la plaque.

Pour d'autres applications, par exemple des évaporateurs pour réfrigérateurs, il existe des échangeurs liquide-air fabriqués à l'aide d'une technique appelée « roll-bond » ou soudage par laminage, laquelle consiste à laminer à chaud deux plaques métalliques, en déposant préalablement sur une des surfaces de contact une couche de graphite de forme appropriée pour le circuit du liquide ; une fois les plaques laminées, de l'air est injecté entre elles afin de déformer le matériau des plaques et de « gonfler » le conduit défini par le dépôt de graphit.

Bien que cette technologie ait l'avantage d'offrir une certaine latitude quant à la forme du conduit et de faciliter le processus de fabrication, les échangeurs fabriqués de cette manière se sont jusqu'à présent avérés inadaptés au refroidissement du combustible d'un moteur.

En effet, cette technologie permet uniquement de fabriquer des conduits de hauteur et de largeur réduites, à savoir une hauteur maximale de 3 mm et une largeur maximale de 10 ou 12 mm, environ ; la section de passage des conduits est, par conséquent, plutôt limitée et les pertes de charge dans l'écoulement du combustible sont élevées. Par ailleurs, les tolérances de fabrication associées au processus de soudage par laminage sont plutôt strictes.

DESCRIPTION DE L'INVENTION

Le but de la présente invention est de mettre au point un échangeur permettant de réduire les inconvénients susmentionnés ; conformément à ce but, l'échangeur de chaleur de la présente invention est caractérisé en ce que l'intérieur du conduit comprend une pluralité de colonnes de jonction se prolongeant d'une plaque à l'autre, de façon à ce que le fluide circule entre les colonnes de jonction et autour d'elles.

Ces caractéristiques permettent de configurer un conduit de grande largeur, en évitant ainsi des pertes de chaleur importantes, sans pour autant compromettre la robustesse de l'ensemble, avec en outre une réduction du poids ; qui plus est, une bonne répartition du fluide est obtenue à l'intérieur du conduit à colonnes.

Conformément à un mode de réalisation préféré, les colonnes de jonction sont formées par déformation du matériau d'au moins une des plaques.

Dans ce cas, l'échangeur peut être fabriqué avec des dimensions satisfaisantes par laminage à chaud puis gonflement des parties définissant le conduit, de manière à éviter la nécessité d'effectuer des soudures avec apport de matériau et la présence d'une double paroi entre le liquide et l'air, en améliorant ainsi l'échange de chaleur par rapport aux échangeurs traditionnels construits avec une plaque et un tube soudés.

Dans un mode de réalisation, les colonnes de jonction présentent une section comprise entre 7 mm$^2$ et 50 mm$^2$, environ.

De préférence, certaines au moins des colonnes de jonction sont disposées en quinconce ; dans ce cas, la distance entre les centres des colonnes peut être comprise entre 10 mm et 20 mm, environ.

La disposition en quinconce est particulièrement avantageuse dans la mesure où elle assure un remplissage maximal.

En variante, certaines au moins des colonnes de jonction sont disposées en alignement ; dans ce cas, la distance entre colonnes peut être comprise entre 8 mm et 17 mm, environ.

Dans un mode de réalisation, la hauteur du conduit est comprise entre 1 mm et 4 mm, environ.

Cet intervalle de valeurs donne lieu à un compromis adéquat entre l'échange de chaleur et les pertes de charge.

Dans un mode de réalisation, la hauteur du conduit est de 3 mm environ.

Avantageusement, l'échangeur présente également des moyens pour améliorer la dissipation de chaleur ; dans un mode de réalisation, lesdits moyens pour améliorer la dissipation de chaleur comprennent des ailettes de dissipation constituées de portions des plaques découpées sur une partie de leur périmètre et coudées, de manière à ce que lesdites ailettes définissent également des ouvertures pour le passage d'air d'une face à l'autre de l'échangeur.

Les ailettes de dissipation peuvent être formées dans des zones aplaties de l'échangeur, dans lesquelles les deux plaques sont en contact, ou peuvent, en variante, être formées dans des zones de l'échangeur dans lesquelles est défini le conduit de circulation du fluide à refroidir, de manière à ce que le fluide circule également à travers un espace intérieur desdites ailettes.

De préférence, certaines au moins desdites ailettes sont disposées en alternance, en définissant un chemin en zigzag du gazole le long de l'échangeur.

Cette disposition maximise l'aire de la section du conduit tout le long de l'échangeur.

Dans une variante de réalisation, certaines au moins des ailettes sont placées parallèlement les unes aux autres.

Dans un mode de réalisation, l'une des plaques est constituée d'un matériau de dureté supérieure à celle du matériau de l'autre plaque.

La plaque de dureté supérieure peut être utilisée comme plaque exposée de l'échangeur, de manière à protéger l'ensemble.

De préférence, le conduit de circulation de fluide à refroidir comprend au moins un tronçon d'entrée avec une zone de transition dont le diamètre diminue progressivement dans la direction de l'écoulement du fluide.

De manière analogue, le conduit de circulation de fluide à refroidir peut comprendre au moins un tronçon de sortie avec une zone de transition dont le diamètre augmente progressivement dans la direction de l'écoulement du fluide.

L'invention concerne également un procédé de fabrication d'un échangeur de chaleur liquide-air, comprenant au moins les étapes de : dépôt d'une couche de graphite sur certaines zones d'au moins une première plaque métallique ; soudage par laminage de ladite première plaque sur une deuxième plaque métallique ; et injection de l'air sous pression entre les deux plaques afin de séparer les plaques l'une de l'autre par déformation du matériau d'au moins une des plaques, dans les zones dans lesquelles la couche de graphite a été déposée ; le procédé est caractérisé en ce que la couche de graphite est déposée en laissant une pluralité de points intermédiaires dépourvus de graphite, de manière à ce que lesdits points intermédiaires dépourvus de graphite forment des colonnes de jonction entre les deux plaques suite à l'étape d'injection d'air.

Ce procédé permet d'obtenir en une seule opération un échangeur léger et résistant, sans matériau d'apport de soudage et avec une paroi d'échange de chaleur relativement mince, présentant ainsi de bonnes caractéristiques d'échange de chaleur.

De préférence, certains au moins desdits points intermédiaires dépourvus de graphite sont disposés en quinconce.

BREVE DESCRIPTION DES DESSINS

Pour faciliter la compréhension de ce qui précède, on joint des dessins dans lesquels on a représenté, schématiquement et uniquement à titre d'exemple non limitatif, une réalisation pratique.

Dans ces dessins,

la figure 1 est une vue en plan d'un échangeur liquide-air conformément à un premier mode de réalisation de l'invention ;

la figure 2 est une coupe partielle de l'échangeur de la figure 1, selon la ligne II-II, à une échelle élargie ;

la figure 3 est un détail en coupe et à une échelle élargie de l'entrée du fluide ;

les figures 4 à 6 sont des vues en plan de trois variantes de réalisation de l'échangeur ; et

la figure 7 est une perspective en coupe partielle d'une ailette de dissipation conformément à une variante de réalisation.

DESCRIPTION DE MODES DE REALISATION PREFERES

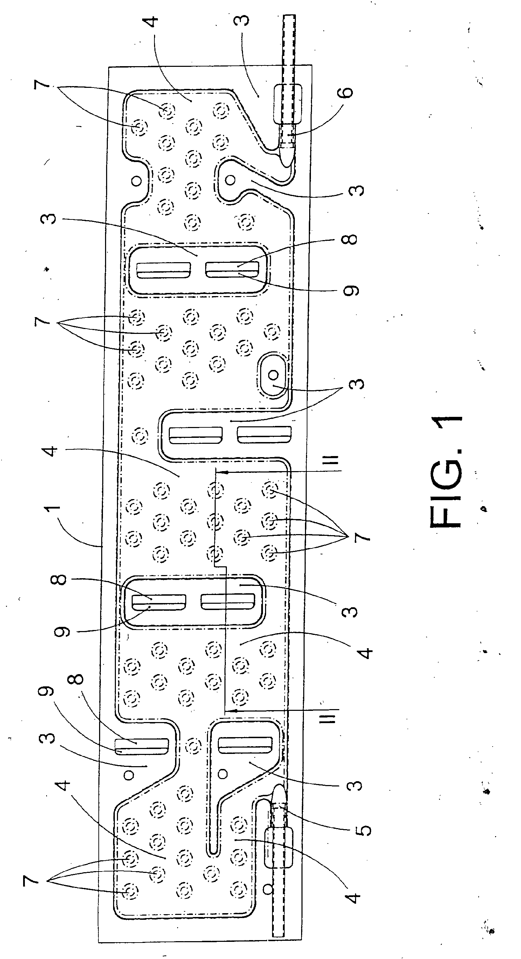

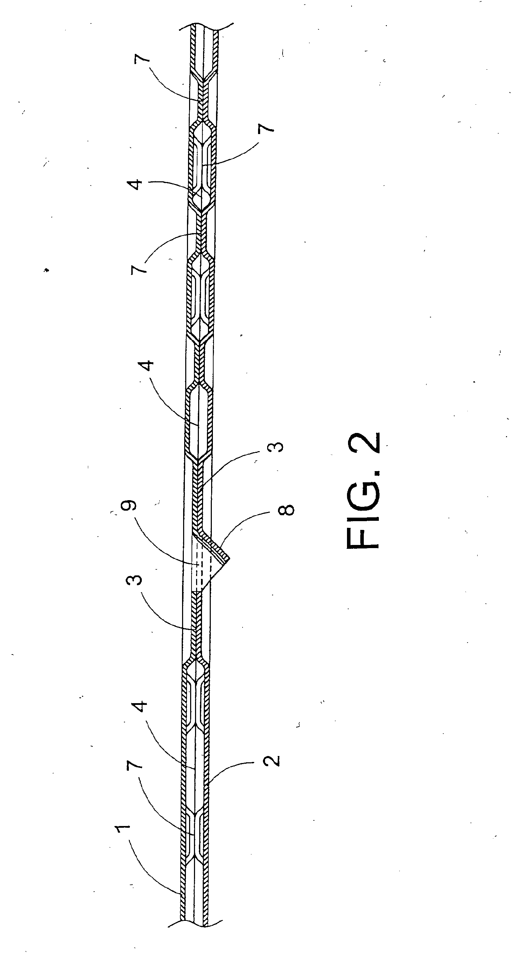

Les figures 1 et 2 illustrent un échangeur liquide-air, destiné dans ce cas particulier à être monté dans la partie inférieure de la carrosserie d'un véhicule pour refroidir à l'aide de l'air extérieur le combustible d'un moteur Diesel à injection directe, dont la température est comprise entre 80°C et 100°C, environ.

L'échangeur présente une forme générale plane et allongée, et est formé d'une plaque métallique supérieure 1 et d'une plaque métallique inférieure 2, adaptées pour être en contact et jointes l'une à l'autre uniquement par leurs bords et par certaines autres zones prédéterminées 3, où l'échangeur présente une configuration aplatie ; hors de ces zones 3, un espace vide est défini entre les plaques, lequel espace constitue un conduit 4 de circulation du -liquide à refroidir. Le conduit 4 présente une entrée de liquide 5 et une sortie de liquide 6, à deux extrémités de l'échangeur.

Dans ce mode de réalisation, les plaques 1 et 2 sont constituées d'un alliage d'aluminium à 99,5 %.

L'air circulant à l'extérieur des plaques 1 et 2 refroidit le liquide circulant à l'intérieur du conduit 4 par échange thermique à travers les plaques.

Comme on peut le voir à la figure 1, le conduit 4 occupe la plus grande partie de la surface dès plaques 1 et 2, de sorte que l'échangeur présente une grande surface d'échange de chaleur et, par conséquent, un bon rendement thermique ; les pertes de charge du fluide sont simultanément réduites.

Pour doter l'échangeur d'une bonne résistance mécanique, des colonnes de jonction 7 d'une plaque à l'autre sont prévues en une pluralité de points du conduit. La position des colonnes 7, disposées en quinconce dans ce mode de réalisation, est visible à la figure 1, tandis que la figure 2 illustre plus clairement leur configuration.

Les zones aplaties 3 dans lesquelles les plaques 1 et 2 sont jointes l'une à l'autre, exception faite des bords qui entourent le conduit, sont prévues pour des orifices de montage de l'échangeur ou pour des applications similaires ; dans certaines zones 3 sont également prévues des ailettes de dissipation de chaleur 8, constituées de portions des plaques découpées sur une partie de leur périmètre et coudées, comme on le constate à la figure 2.

La formation des ailettes de dissipation 8 laisse des ouvertures 9 dans les plaques, à travers lesquelles l'air peut passer d'une face à l'autre de l'échangeur.

En service, les ailettes 8 peuvent dépasser du dessous de l'échangeur dans la direction de l'écoulement de l'air, afin d'améliorer la circulation de l'air, ou dans la direction opposée à l'écoulement de l'air, de manière à ce que l'air pénètre dans les ouvertures par un effet d'aspiration ; dans ce cas, on évite un engorgement possible des ouvertures.

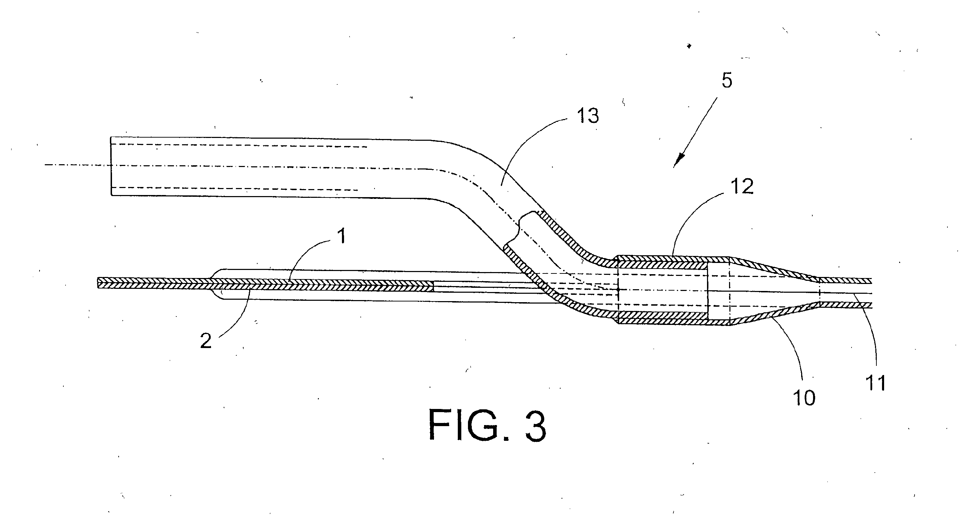

A l'entrée 5 du fluide (figure 3), le conduit 4 s'élargit progressivement, via une zone de transition 10, depuis une embouchure tubulaire 11 de diamètre réduit jusqu'à un manchon d'accouplement 12 de diamètre supérieur, dans lequel un tube d'alimentation 13 est inséré et soudé.

Une construction analogue peut être prévue pour la sortie 6 ; en variante, l'entrée et la sortie du conduit 4 pourraient également être réalisées par des zones tubulaires de diamètre uniforme et dont la longueur ne dépasse pas trois fois le diamètre du tube à insérer.

Grâce à la configuration décrite, l'échangeur conforme à l'invention peut être fabriqué à l'aide d'un procédé comprenant le dépôt d'une couche de graphite sur les zones d'une des plaques 1, 2 appelées à constituer le conduit 4, puis le soudage par laminage des plaques entre elles et l'injection d'air sous pression entre celles-ci : les plaques 1, 2 ne restent pas soudées aux endroits comportant du graphit, et, suite à l'injection d'air, le matériau des plaques se déforme et le conduit 4 se forme par « gonflement ».

Pour doter le conduit 4 des colonnes de jonction 7, la couche de graphite est déposée sans recouvrir les points intermédiaires où les colonnes 7 seront formées, en plus des zones 3 où l'on souhaite que les plaques restent soudées.

Lors d'opérations ultérieures, on estampe les orifices de montage et les lignes nécessaires à la formation des ouvertures 9 de passage d'air, ainsi que les ailettes de dissipation 8.

Il est possible de prévoir des caractéristiques mécaniques différentes pour les deux plaques 1, 2 : par exemple, la plaque destinée à rester exposée sous le véhicule peut être réalisée en un alliage plus dur de façon à procurer une plus grande résistance aux objets extérieurs ; dans ce cas, la plaque inférieure se déformera peu, voire pas du tout, et le conduit 4 sera formé par déformation exclusive de la plaque supérieure et présentera une hauteur moins importante.

Un autre moyen permettant d'améliorer la résistance de l'échangeur consiste à recourber les bords des plaques parallèles à l'écoulement d'air, pour augmenter ainsi la rigidité de l'ensemble.

Les paramètres géométriques et les dimensions convenant le mieux à l'échangeur décrit dépendent de facteurs multiples, liés tant à son usage qu'aux exigences du processus de fabrication susmentionné.

La section des colonnes de jonction 6 et la distance entre celles-ci dépendent, d'une part, des exigences en matière de robustesse de l'ensemble (les espaces entre colonnes ne doivent pas être supérieurs à 15 mm pour éviter les déformations en cours d'utilisation) et, d'autre part, de la chute de pression qu'elles provoquent dans le fluide ; en règle générale, on peut dire que les zones aplaties 3 et les colonnes de jonction 6 doivent occuper environ 30 % ou 40 % de la surface pour offrir une résistance suffisante sans pour autant nuire au bon fonctionnement.

Ce critère donne des valeurs comprises entre 3 mm et 8 mm pour le diamètre des colonnes de jonction de section circulaire (correspondant à des sections comprises entre 7 mm$^2$ et 50 mm$^2$, environ), et des distances entre les centres des colonnes comprises entre 10 mm et 20 mm, pour une disposition en quinconce telle que représentée à la figure 1. Pour une disposition des colonnes en alignement, la distance entre les centres sera quelque peu inférieure, soit entre 8 mm et 17 mm.

La valeur du diamètre hydraulique de l'échangeur est de préférence comprise entre 2 et 8 mm pour le refroidissement du combustible, de façon à obtenir un compromis adéquat entre la dissipation de chaleur et la chute de pression. Dans un conduit de forme très irrégulière, comme celui de l'échangeur de l'invention, le diamètre hydraulique varie en fonction de la section choisie ; on peut toutefois supposer, comme première approximation, que le conduit présente une section rectangulaire beaucoup plus large que haute, avec laquelle le diamètre hydraulique peut être estimé par

$$D = 2 . h$$

où h est la hauteur du conduit. Ainsi, grâce à cette simplification, des diamètres hydrauliques compris entre 2 mm et 8 mm donnent lieu à des hauteurs de conduit comprises entre 1 mm et 4 mm, environ.

Les résultats expérimentaux montrent qu'une valeur de quelque 3 mm constitue une solution particulièrement judicieuse si les deux plaques présentent des caractéristiques mécaniques similaires ; si une seule plaque se déforme du fait que l'autre est plus dure, il peut être plus judicieux d'utiliser la limite inférieure de 1 mm.

Il faut toutefois ne pas perdre de vue que toutes ces valeurs sont purement indicatives et que l'expert pourra établir des valeurs satisfaisantes en dehors des intervalles mentionnés, en particulier si l'échangeur trouve une application différente de celle qui a été mentionnée.

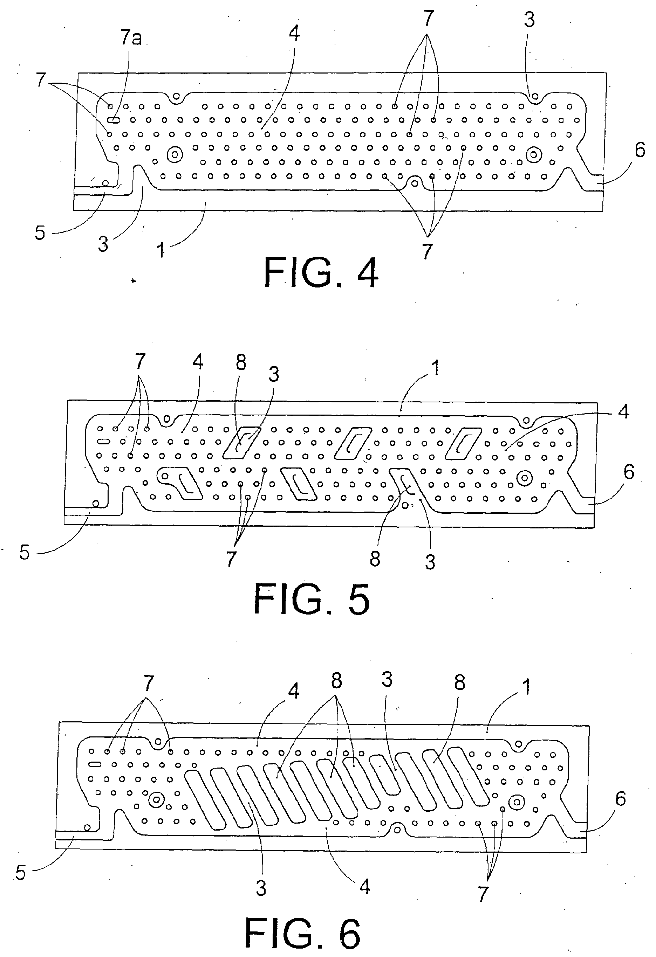

On décrit dans la suite d'autres modes de réalisation de l'échangeur conformément à l'invention, en référence aux figures 4, 5 et 6.

La figure 4 montre un échangeur de configuration très simple, sans ailettes de dissipation ni ouvertures pour le passage d'air ; dans ce cas, le conduit 4 occupe une surface encore plus grande de l'échangeur, et les zones aplaties 3 se limitent aux zones nécessaires aux orifices de montage et aux zones d'entrée 5 et de sortie 6.

Les colonnes de jonction 7 sont également disposées en quinconce ; la référence 7a indique une colonne de configuration particulière, de section allongée plutôt que circulaire, mieux adaptée aux bords des plaques.

Les colonnes 7 peuvent, de fait, présenter des sections non circulaires (polygonales, ovales, elliptiques, carrées ...), et l'on peut même envisager des colonnes de formes différentes dans un même échangeur.

La figure 5 illustre un échangeur similaire à celui de la figure 4, mais pourvu d'ailettes de dissipation 8, formées dans des zones aplaties 3 correspondantes où les deux plaques 1, 2 sont en contact et soudées l'une à l'autre ; bien que cela ne soit pas illustré en détail à la figure 5, les ailettes 8 forment des ouvertures de passage d'air correspondantes, comme on l'a décrit en référence aux ailettes de dissipation représentées à la figure 1.

Dans ce cas, les ailettes 8 sont disposées en alternance de manière à définir un chemin en zigzag du gazole le long de l'échangeur.

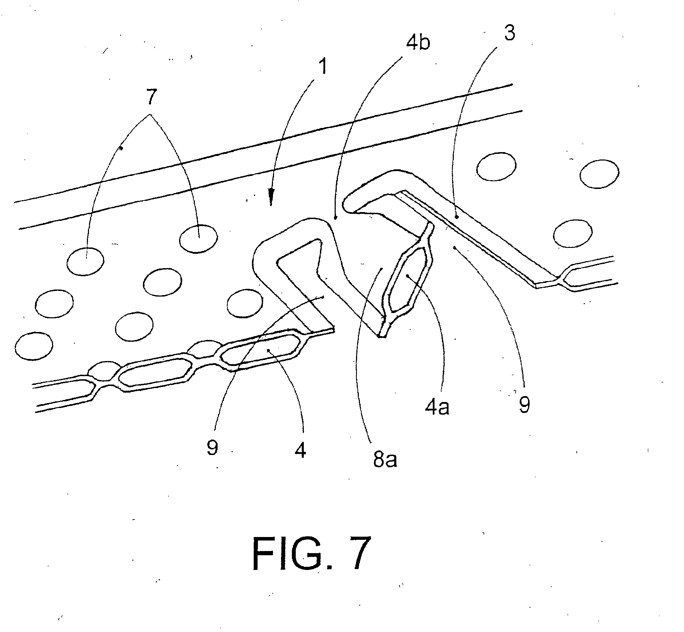

Une variante supplémentaire de l'échangeur est représentée à la figure 6 : dans ce cas, on a prévu des ailettes de dissipation 8 et des ouvertures de passage d'air correspondantes, parallèles les unes aux autres. Les ailettes 8 sont formées dans des zones aplaties 3, comme dans les cas précédents.

Que les ailettes 8 soient disposées en alternance ou en parallèle, elles pourraient être coudées le long d'un axe central de façon à laisser, de chaque côté, une ouverture de passage d'air.

Pour finir, la figure 7 illustre de façon schématique un mode de réalisation possible d'une ailette de dissipation 8a qui est entourée par une zone aplatie 3 mais qui est gonflée pour former un espace intérieur 4a qui communique avec le conduit 4 par des passages de fluide 4b prévus aux points de jonction de l'ailette et du reste de l'échangeur.

Dans ce cas, le fluide à refroidir circule également à l'intérieur des ailettes de dissipation et des ouvertures de passage d'air 9 sont définies des deux côtés de l'ailette.

Pour ce qui est du nombre d'ailettes 8 qu'il convient de disposer dans un échangeur, il faut tenir compte du fait qu'un nombre plus important d'ailettes améliore le transfert de chaleur mais augmente la perte de charge. Il est possible de prévoir différentes configurations, en faisant varier le nombre de colonnes de jonction entre les ailettes dans la direction longitudinale et transversale, ainsi que la largeur et la hauteur des ailettes.

Bien que l'on ait décrit et représenté un mode de réalisation concret de la présente invention, il est bien évident que l'expert en la matière pourra introduire des variantes et des modifications, ou remplacer les détails par d'autres détails techniquement équivalents, sans pour autant s'écarter du cadre de protection défini par les revendications jointes.

Par exemple, bien qu'il ait été fait référence à un échangeur à un seul conduit de circulation du fluide à refroidir, on pourra concevoir un échangeur à deux conduits, voire davantage, dans chacun desquels se trouvent des colonnes de jonction.

## Revendications

**1.** Echangeur de chaleur liquide-air, en particulier pour refroidir le combustible dans un moteur à combustion interne de véhicule, comprenant deux plaques (1, 2) sensiblement parallèles définissant entre elles au moins un conduit (4) de circulation du fluide à refroidir, **caractérisé en ce que** l'intérieur dudit conduit (4) comprend une pluralité de colonnes de jonction (7) se prolongeant d'une plaque à l'autre, de façon à ce que le fluide circule entre les colonnes de jonction (7) et autour d'elles.

**2.** Echangeur selon la revendication 1, **caractérisé en ce que** les colonnes de jonction (7) sont formées par déformation du matériau d'au moins une des plaques (1, 2).

**3.** Echangeur selon l'une des revendications 1 ou 2, **caractérisé en ce que** les colonnes de jonction (7) présentent une section comprise entre 7 mm$^2$ et 50 mm$^2$, environ.

4. Echangeur selon l'une des revendications 1 à 3, **caractérisé en ce que** certaines au moins des colonnes de jonction (7) sont disposées en quinconce.

5. Echangeur selon la revendication 4, **caractérisé en ce que** la distance entre les centres des colonnes (7) est comprise entre 10 mm et 20 mm, environ.

6. Echangeur selon l'une des revendications 1 à 3, **caractérisé en ce que** certaines au moins des colonnes de jonction (7) sont disposées en alignement.

7. Echangeur selon la revendication 6, **caractérisé en ce que** la distance entre les centres des colonnes (7) est comprise entre 8 mm et 17 mm, environ.

8. Echangeur selon l'une quelconque des revendications précédentes, **caractérisé en ce que** la hauteur du conduit (4) est comprise entre 1 mm et 4 mm, environ.

9. Echangeur selon la revendication 8, **caractérisé en ce que** la hauteur du conduit (4) est de 3 mm environ.

10. Echangeur selon l'une quelconque des revendications précédentes, **caractérisé en ce qu'**il présente également des moyens (8, 9) pour améliorer la dissipation de chaleur.

11. Echangeur selon la revendication 10, **caractérisé en ce que** lesdits moyens pour améliorer la dissipation de chaleur comprennent des ailettes de dissipation (8, 8a) constituées de portions des plaques (1, 2) découpées sur une partie de leur périmètre et coudées, de manière à ce que lesdites ailettes (8, 8a) définissent également des ouvertures (9) pour le passage d'air d'une face à l'autre de l'échangeur.

12. Echangeur selon la revendication 11, **caractérisé en ce que** lesdites ailettes de dissipation (8) sont formées dans des zones aplaties (3) de l'échangeur, dans lesquelles les deux plaques (1, 2) sont en contact.

13. Echangeur selon la revendication 11, **caractérisé en ce que** les ailettes de dissipation (8a) sont formées dans des zones de l'échangeur dans lesquelles est défini le conduit de circulation (4) du fluide à refroidir, de manière à ce que le fluide circule également à travers un espace intérieur (4a) desdites ailettes (8a).

14. Echangeur selon l'une des revendications 11 à 13, **caractérisé en ce que** certaines au moins desdites ailettes (8, 8a) sont disposées en alternance, en définissant un chemin en zigzag du gazole le long de l'échangeur.

15. Echangeur selon l'une des revendications 11 à 14, **caractérisé en ce que** certaines au moins des ailettes (8, 8a) sont placées parallèlement les unes aux autres.

16. Echangeur selon l'une quelconque des revendications précédentes, **caractérisé en ce que** l'une des plaques (1, 2) est constituée d'un matériau de dureté supérieure à celle du matériau de l'autre plaque.

17. Echangeur selon l'une quelconque des revendications 1 à 16, **caractérisé en ce que** le conduit (4) de circulation de fluide à refroidir comprend au moins un tronçon d'entrée (5) avec une zone de transition (10) dont le diamètre diminue progressivement dans la direction de l'écoulement du fluide.

18. Echangeur selon l'une quelconque des revendications 1 à 16, **caractérisé en ce que** le conduit (4) de circulation de fluide à refroidir comprend au moins un tronçon de sortie (6) avec une zone de transition dont le diamètre augmente progressivement dans la direction de l'écoulement du fluide.

19. Procédé de fabrication d'un échangeur de chaleur liquide-air, comprenant au moins les étapes de : dépôt d'une couche de graphite sur certaines zones (4) d'au moins une première plaque métallique (1, 2) ; soudage par laminage de ladite première plaque sur une deuxième plaque métallique (1, 2) ; et injection de l'air sous pression entre les deux plaques (1, 2) afin de séparer les plaques l'une de l'autre par déformation du matériau d'au moins une des plaques, dans les zones (4) dans lesquelles la couche de graphite a été déposée ; **caractérisé en ce que** la couche de graphite est déposée en laissant une pluralité de points intermédiaires dépourvus de graphite, de manière à ce que lesdits points intermédiaires dépourvus de graphite forment des colonnes de jonction (7) entre les deux plaques (1, 2) suite à l'étape d'injection d'air.

20. Procédé selon la revendication 19, **caractérisé en ce que** certains au moins desdits points intermédiaires dépourvus de graphite sont disposés en quinconce.

FIG. 1

EP 1 321 733 A2

FIG. 2

FIG. 3

FIG. 4

FIG. 5

FIG. 6

FIG. 7